# EUROPEAN PATENT SPECIFICATION

(11) **EP 0 920 181 B1**
(45) Date of publication and mention of the grant of the patent: **30.07.2008**
(21) Application number: 98309643.9
(22) Date of filing: 25.11.1998
(51) Int. Cl.: H04N 1/00

(54) **Communication apparatus and storage medium**
Ubertragungsgerät und Speichermedium
Dispositif de communication et support d'enregistrement

(30) Priority: 25.11.1997 JP 32278997
(43) Date of publication of application: 02.06.1999
(73) Proprietor: Brother Kogyo Kabushiki Kaisha, Nagoya-shi, Aichi-ken 467 (JP)
(72) Inventor: Asai, Norihiko, Mizuho-ku, Nagoya-shi, Aichi-ken 467 (JP)
(74) Representative: Price, Nigel John King

(56) References cited:
- WO-A-97/10668
- WO-A-97/16916
- WO-A-97/26753
- GB-A- 2 338 863

## Description

The present invention relates to a communication apparatus capable of communicating with an external communication device via a domestic communication network (such as a public telephone network) and the Internet.

Computers have been widely used for exchanging various kinds of data, information and the like via the Internet. As is well known, with the use of the Internet, it is easy to send a letter (e-mail) to a person living in a same country as well as to a person living in a far-flung country.

Nowadays, there are some Internet service providers (simply called "providers" hereinafter) who provide a service enabling people to make telephone calls via the Internet (Internet phone). In order to utilize such telephone service, the user first has to make a connection to one of the access points arranged by the provider. Typically, the connection to the access point may be made through an existing public telephone network.

After the connection to the access point is properly established, the user inputs a telephone number of a receiving computer to which he or she intends to make a call. In this way, the user can connect his or her personal computer to the receiving computer through the telephone networks and the Internet.

Usually, an international telephone call may be rather expensive. On the other hand, by the Internet phone, the caller does not need to pay long-distance telephone charges. Thus, the number of people willing to use the Internet phone will be increased as the quality of the data transmission is improved.

In the conventional system described above, however, the caller has to input several pieces of access data for making a connection to the access point. Typically, the access data includes the telephone number of the access point, the user ID number, the predetermined password and so on. After these pieces of data are properly input, the user additionally has to input the telephone number of the receiving communication device. Obviously, such data-inputting operations can be disadvantageously annoying.

WO97/10668 discloses a system which determines whether transmission of data should be by fax or email depending on whether there is an email address for the recipient in the system's address book. If there is an email address present, the data is sent by email, if not, it is sent by fax.

### SUMMARY OF THE INVENTION

It is, therefore, an object of the present invention to provide a communication apparatus capable of overcoming the problems stated above.

Another object of the present invention is to provide a storage medium incorporated in such a communication apparatus.

According to a first aspect of the present invention, there is provided a communication apparatus for communicating with an external device via at least a first network utilizing the Internet and a second network excluding the Internet, the communication apparatus being
characterized by comprising:
an access data storage for storing access data needed for establishing a connection to the first network;
a connection selector for determining whether the first network is to be selected or not; and
a transmission controller for reading out the access data from the access data storage and for sending the access data when the connection selector selects the first network; characterised in that
the determination of whether the first network is to be selected or not is performed by discerning the location of the external device based on identification data belonging to the external device.

With such an arrangement, access data (such as a user ID number, password, and so on) needed for making a connection to the predetermined network is automatically sent out together with the identification data (e.g. the telephone number) of the external device. Thus, there is no need for the user of the communication apparatus to manually type in those access data.

Information exchanged between the communication apparatus and the external device may be aural data and/or image data.

According to a preferred embodiment, the communication apparatus comprises an identification data storage for storing the identification data of the external device. In such an instance, the transmission controller may be arranged to read out the identification data registered in the identification data storage when a request for selecting the identification data is issued.

With such an arrangement, since the identification data of the external device is registered in the identification data storage, the user does not need to type in the full length of the identification data of the external device every time the user makes a phone call to the external device. Instead, the user may only have to press a certain key assigned to the identification data of the external device.

The access data may comprise a user identification number and a password.

Preferably, the communication apparatus may further comprise an electrically erasable programmable read only memory serving as the access data storage.

According to another embodiment, the communication apparatus may further comprise an electrically erasable programmable read only memory serving as both the access data storage and the identification data storage.

According to the preferred embodiment, the communication apparatus may further comprise a central processing unit serving as the connection selector and the transmission controller.

The identification data may be a telephone number assigned to the external device.

The connection selector may be arranged to determine that the predetermined network is to be selected when the identification data indicates that the external device is located in a foreign country.

According to the preferred embodiment, the communication apparatus is a facsimile machine.

According to a second aspect of the present invention, there is provided a storage medium for storing programs for controlling a communication apparatus communicating with an external device via at least a first network utilizing the Internet and a second network excluding the Internet, the communication apparatus including an access data storage for storing predetermined access data needed for accessing the first network, the storage medium comprising:
a connection selecting program for determining whether the first network is to be selected or not; and
a transmission controlling program for reading out the access data from the access data storage and sending the access data when the first network is to be selected,
characterised in that the determination of whether the first network is to be selected or not is performed by discerning the location of the external device based on identification data belonging to the external device.

Preferably, the storage medium may comprise a read only memory.

Other features and advantages of the present invention should become clear from the detailed description to be made hereinafter referring to the accompanying drawings.

### BRIEF DESCRIPTION OF THE DRAWINGS

In the accompanying drawings:
Fig. 1 illustrates an example of connecting arrangement of a communication apparatus embodying the present invention;
Fig. 2A is a block diagram showing principal components of a facsimile machine as an example of the communication apparatus of Fig. 1;
Fig. 2B illustrates details of some of the principal components shown in Fig. 2A; and
Fig. 3 is a flow chart showing a communication procedure using the facsimile machine of the present invention.

### DETAILED DESCRIPTION OF THE PREFERRED EMBODIMENT

The preferred embodiments of the present invention will be described below with reference to the accompanying drawings.

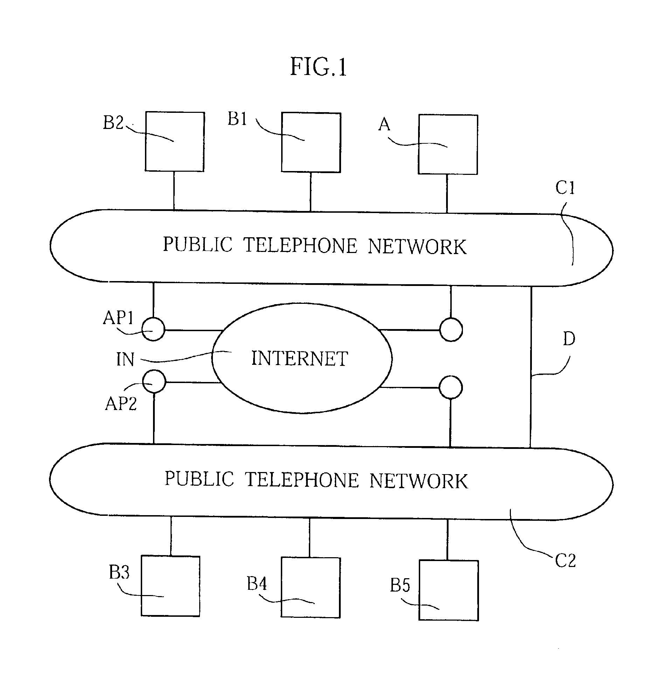

Reference is first made to Fig. 1 illustrating how a communication apparatus according to the present invention can be connected to other communication devices. In Fig. 1, the communication apparatus of the present invention is designated by reference character A, whereas the other communication devices are designated by reference characters B1-B5. In the following description, the communication apparatus of the present invention will be described as a facsimile machine, but this feature is not limitative. The other communication devices B1-B5 may be a conventional telephone or facsimile machine.

As shown in Fig. 1, the facsimile machine A and other communication devices B1-B2 are physically connected to a public telephone network C1 which may be laid in Japan, while the other communication devices B3-B5 are physically connected to another public telephone network C2 provided in a foreign country (the United States, for example). The first network C1 and the second network C2 are connected to each other via an international communications line D.

The facsimile machine A can be connected to the Internet which is designated by reference "IN" in Fig. 1. As is well known, the Internet is an open, glove-spanning network comprising other networks that are attached to one another via pathways that facilitate the exchange of information, data and files.

One way for the facsimile machine A to be connected to the Internet is by dial-up connection in which the user causes the facsimile machine A to be connected to an access point AP1 arranged by a provider. The access point AP1 is located at a certain point on the first network C1. For making use of the dial-up connection service, the caller (i.e., the user of the facsimile machine A) needs to send predetermined pieces of access information such as the telephone number of the access point AP1, a user ID number, a password and so on. According to the present invention, for specifying one of the communication devices B1-B5, the facsimile machine A sends out the telephone number of the desired communication device (receiving communication device).

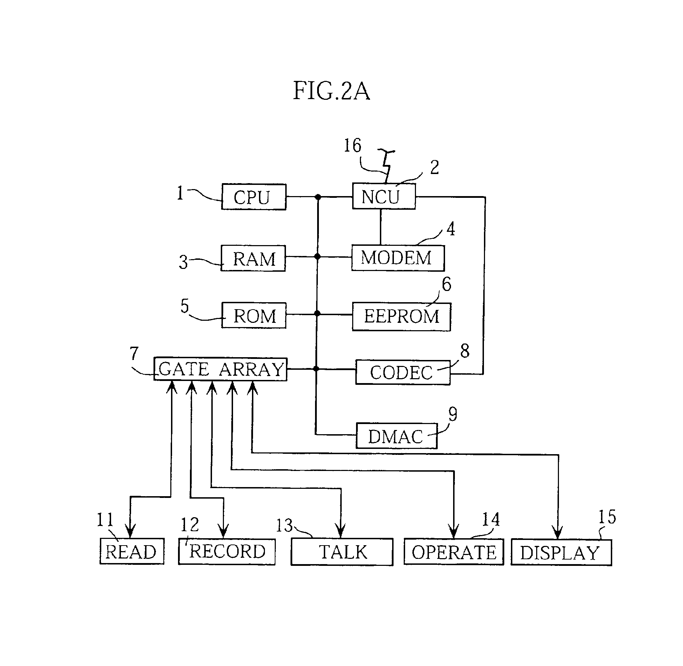

Reference is now made to Fig. 2A which is a circuit block diagram showing principal components of the facsimile machine A.

Specifically, the facsimile machine A comprises a CPU (central processing unit) 1, an NCU (network control unit) 2, a RAM (random access memory) 3, a modem (modulator-demodulator) 4, a ROM (read only memory) 5, an EEPROM (electrically erasable and programmable read only memory) 6, a gate array 7, a codec (coder-decoder) 8, and a DMAC (direct memory access controller) 9.

Further, the facsimile machine also comprises a reading section 11, a recording section 12, a talking section 13, an operating section 14 and a display section 15.

The CPU 1, the NCU 2, the RAM 3, the modem 4, the ROM 5, the EEPROM 6, the gate array 7, the codec 8 and the DMAC 9 are connected to each other via bus lines. The bus lines include address bus lines, data bus lines and control signal bus lines. The gate array 7 is connected to the reading section 11, the recording section 12, the talking section 13, the operating section 14 and the display section 15, respectively. The NCU 2 is connected to the modem 4.

The CPU 1 provides an overall control of the facsimile machine A as a whole. The NCU 2 is connected to the telephone line 16 for providing network control.

The RAM 3 stores various kinds of data. The modem 4 modulates the codes to be transmitted and demodulates the received codes. The ROM 5 stores various programs and initial values as required for controlling the facsimile machine.

The EEPROM 6 stores various flags such as initial value flags, while also storing various kinds of setting value data.

The gate array 7 functions as a I/O interface (input/output interface) for the CPU 1 for data transmission, while also performing various kinds of image and/or aural data processing. The codec 8 performs coding of the transmitting data and decoding of the received data. The DMAC 9 provides memory access control with respect to the RAM 3 and the EEPROM 6, so that data is written in and/or read from those components.

The reading section 11 is provided with a light source, an image sensor and a paper feeding motor for example. The reading section 11 reads out a document for output of analog image signals. The recording section 12 is provided with a printing device such as an ink jet printer or a thermoelectronic printer. With the use of such a printing device, transmitted images or read-out images are printed on a recording paper sheet.

The talking section 13 includes a handset provided with a receiver and a speaker. The operating section 14 is provided with a plurality of key switches, thereby enabling the user to perform various kinds of operations. The display section 15 is provided with an LCD (liquid crystal display). Under the control of the CPU 1, the LCD presents visually the telephone number of the caller, for example.

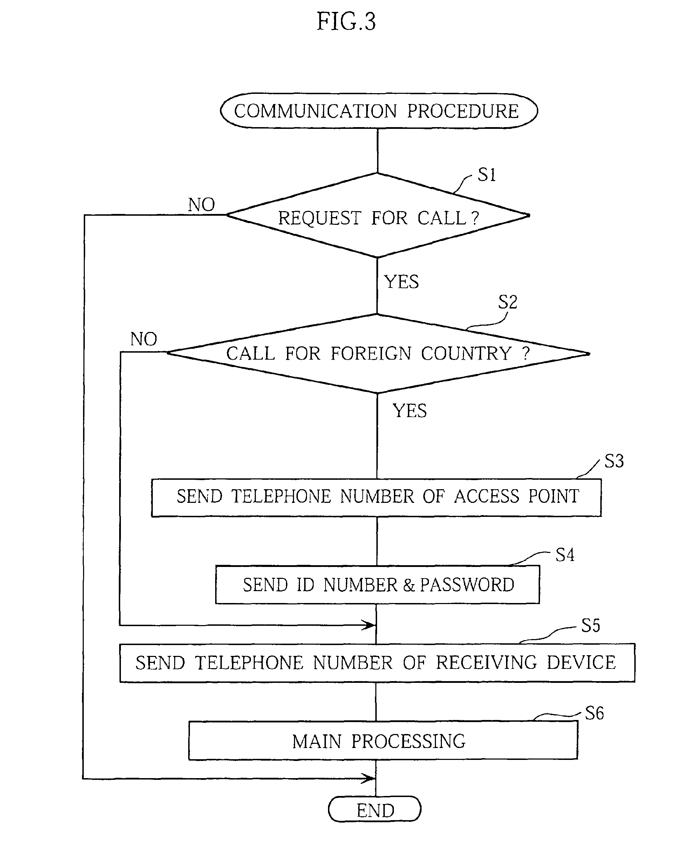

Reference is now made to Fig. 3 which is a flow chart illustrating how a communication procedure is performed in the facsimile machine A.

Specifically, based on certain programs stored in the ROM 5, the CPU 1 performs the illustrated communication procedure, which includes several steps, as will be described below. The communication procedure will be repeated at regular intervals under the control of the CPU 1.

First, the CPU 1 determines whether or not a request for making a call has been input (S1) by the user from the operating section 14. The CPU 1 determines that such a request is made, when the user inputs a desired telephone number from the operating section 14, or when the user presses e.g. a single-touch button which corresponds to the desired telephone number. In the latter case, the desired telephone number has been registered beforehand in the EEPROM 6 together with other telephone numbers.

When there is a request for making a call (S1:YES), the CPU 1 determines whether the telephone number belongs to a person (or a corporation or whatever) residing in Japan or a person in a foreign country (S2). Specifically, when the telephone number includes a country code, the CPU 1 determines that the telephone number belongs to someone residing in a foreign country, whereas when there is no country code included, the CPU determines that the telephone number is a domestic one.

At the step S2, when it is a foreign telephone number (belonging to the communication device B3, for example), the CPU 1 causes the telephone number of the device B3 to be stored in the RAM 3 for a while. At this stage, the CPU 1 reads out the telephone number of the access point AP1 from the EEPROM 6 (that is registered beforehand) and sends it out through the telephone line 16 (S3).

After a connection between the facsimile machine A and the access point AP1 is established, the CPU 1 reads out the ID number and password of the user from the EEPROM 6 and sends them out (S4). The ID number and the password are necessary information for connecting the facsimile machine A to the Internet via the access point AP1.

When the ID number and the password are recognized at the access point AP1, the facsimile machine A is connected to the Internet (and consequently to the second network C2 via the Internet). Then, the CPU 1 reads out the telephone number which is stored in the RAM 3 at the step S3 and sends it out (S5).

Finally, when the connection between the facsimile machine A and the communication device B3 is established, it is possible to perform the exchange of aural data and/or image data between the two apparatus (S6). Thereafter, upon receiving a request for ending the communication procedure, the CPU 1 causes the main routine of the communication procedure to come to an end.

At the step S2, when it is a domestic telephone number (e.g.the telephone number of the communication device B1) (S2:NO), the CPU 1 proceeds to the step S5, thereby sending out the telephone number of the device B1. In this instance, the CPU 1 does not connect the facsimile machine A to the Internet. In other words, the facsimile machine A and the communication device B1 exchange data via the first network C1 only.

At the step S1, when there is no request for making a call (S1:NO), the CPU 1 ends the main routine of the communication procedure. After that, the CPU 1 repeatedly performs the step S1 at regular intervals.

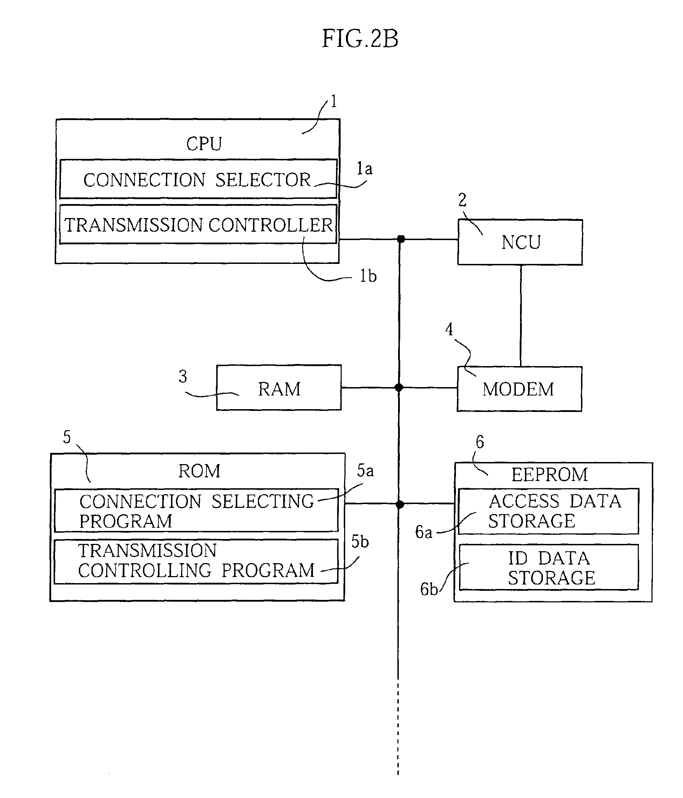

As can be seen from the above description, the EEPROM 6 realizes an access data storage 6a, as shown in Fig. 2B. In addition, the EEPROM 6 also serves as an identification data storage 6b for storing a predetermined number of pieces of data belonging to other communication devices.

The CPU 1, which operates based on programs stored in the ROM 5, realizes a connection selector la for determining which network should be used (in the illustrated embodiment, the first network C1 only, or, the first and second networks C1-C2 plus the Internet). The CPU 1 also serves as a transmission controller 1b which causes the access data (such as the telephone number of the access point, the user's ID and so on) to be read out from the access data storage 6a of the EEPROM 6 and be sent out.

The ROM 5 serves as a storage medium which holds various programs for controlling the facsimile machine A. In particular, the ROM 5 stores a connection selecting program 5a for determining which network should be used, and a transmission controlling program 5b for handling the access data. Specifically, under the control of the program 5b, the access data is read out from the EEPROM 6 and sent out through the telephone line 16.

According to the present invention, when the user wants to make a telephone call to a communication device located in a foreign country, the Internet is automatically selected to be used (together with the domestic communications networks). This is advantageous in reducing the communication costs, since the communication via the Internet is less expensive than via the international communications line. In addition, the user's ID number and password, which are necessary for accessing the Internet, are automatically sent out through the telephone line 16. Thus, the user does not have to input the access data every time he or she tries to make an international phone call via the Internet.

In the above embodiment, the Internet is selected only when the user of the facsimile machine A tries to make a connection to a communication device located abroad. However, it is also possible to use the Internet for data transmission between the facsimile machine A and a domestic communication device.

## Claims

1. A communication apparatus (A) for communicating with an external device (B1-B5) via at least a first network (IN) utilizing the Internet and a second network (C1) excluding the Internet, the communication apparatus being **characterized by** comprising:
an access data storage (6a) for storing access data needed for establishing a connection to the first network (IN);
a connection selector (1a) for determining whether the first network is to be selected or not; and
a transmission controller (1b) for reading out the access data from the access data storage and for sending the access data when the connection selector selects the first network; **characterised in that**
the determination of whether the first network is to be selected or not is performed by discerning the location of the external device based on identification data belonging to the external device.

2. The communication apparatus according to claim 1, further comprising an identification data storage (6b) for storing the identification data of the external device.

3. The communication apparatus according to claim 2, further comprising an electrically erasable programmable read only memory (6) serving as the access data storage and the identification data storage.

4. The communication apparatus according to claims 2 or 3, wherein the transmission controller is arranged to read out the identification data registered in the identification data storage (6b) when a request for selecting the identification data is issued.

5. The communication apparatus according to any one of claims 1 to 4, wherein the access data comprises a user identification number and a password.

6. The communication apparatus according to any one of claims 1 to 5, further comprising an electrically erasable programmable read only memory (6) serving as the access data storage.

7. The communication apparatus according to any one of claims 1to 6, further comprising a central processing unit (1) serving as the connection selector and the transmission controller.

8. The communication apparatus according to any one of claims 1 to 7, wherein the identification data is a telephone number assigned to the external device.

9. The communication apparatus according to any one of claims 1 to 8 when appendent on claim 1, wherein the connection selector determines that the first network is to be selected when the identification data indicates that the external device is located in a foreign country.

10. The communication apparatus according to any one of claims 1 to 9, wherein the communication apparatus is a facsimile machine.

11. The communication apparatus according to any one of claims 2 and 3 to 10 when appendent on claim 2, wherein when the connection selector (1a) selects the second network (C1), the transmission controller (1b) sends out only the identification data stored in the identification data storage (6b).

12. The communication apparatus according to any one of claims 2 and 3 to 11 when appendent on claim 2, wherein when the connection selector selects a network excluding the Internet, the transmission controller sends out only the identification data stored in the identification data storage.

13. The communication apparatus according to any one of claims 1 to 12, further comprising an input device (14) for entering the identification data of the external device.

14. A storage medium (5) for storing programs for controlling a communication apparatus (A) communicating with an external device (B1-B5) via at least a first network (IN) utilizing the Internet and a second network (C1) excluding the Internet, the communication apparatus including an access data storage (6a) for storing predetermined access data needed for accessing the first network, the storage medium comprising:
a connection selecting program (5a) for determining whether the first network is to be selected or not;
and
a transmission controlling program (5b) for reading out the access data from the access data storage and sending the access data when the first network is to be selected, **characterised in that**
the determination of whether the first network is to be selected or not is performed by discerning the location of the external device based on identification data belonging to the external device.

15. The storage medium according to claim 14, wherein the storage medium comprises a read only memory (5).

## Patentansprüche

1. Kommunikationsgerät (A) zum Kommunizieren mit einer externen Vorrichtung (B1-B5) über mindestens ein erstes Netzwerk (IN) unter Benutzung des Internets und ein zweites Netzwerk unter Ausschluss des Internets, wobei das Kommunikationsgerät **gekennzeichnet ist durch**:
einen ersten Zugriffsdatenspeicher (6a) zum Speichern von Zugriffsdaten, die zum Herstellen einer Verbindung zu dem ersten Netzwerk (IN) benötigt werden;
einen Verbindungsselektor (1a) zum Bestimmen, ob das erste Netzwerk auszuwählen ist oder nicht; und
eine Übertragungssteuerung (1b) zum Auslesen der Zugriffsdaten aus dem Zugriffsdatenspeicher und zum Senden der Zugriffsdaten, wenn der Verbindungsselektor das erste Netzwerk auswählt;
**dadurch gekennzeichnet,**
**dass** die Bestimmung, ob das erste Netzwerk auszuwählen ist oder nicht, ausgeführt wird **durch** Wahrnehmen des Ortes der externen Vorrichtung auf der Grundlage von Identifikationsdaten, die zu der externen Vorrichtung gehören.

2. Kommunikationsgerät nach Anspruch 1, weiter mit einem Identifikationsdatenspeicher (6b) zum Speichern der Identifikationsdaten der externen Vorrichtung.

3. Kommunikationsgerät nach Anspruch 2, weiter mit einem elektrisch löschbaren programmierbaren Nurlesespeicher (6), der als der Zugriffsdatenspeicher und der Identifikationsdatenspeicher dient.

4. Kommunikationsgerät nach Anspruch 2 oder 3, bei dem die Übertragungssteuerung angeordnet ist zum Auslesen der Identifikationsdaten, die in dem Identifikationsdatenspeicher (6b) registriert sind, wenn eine Anforderung zum Auswählen der Identifikationsdaten ausgegeben wird.

5. Kommunikationsgerät nach einem der Ansprüche 1 bis 4, bei dem die Zugriffsdaten eine Benutzeridentifikationsnummer und ein Passwort enthalten.

6. Kommunikationsgerät nach einem der Ansprüche 1 bis 5, weiter mit einem elektrisch löschbaren programmierbaren Nurlesespeicher (6), der als der Zugriffsdatenspeicher dient.

7. Kommunikationsgerät nach einem der Ansprüche 1 bis 6, weiter mit einer Zentralverarbeitungseinheit (1), die als der Verbindungsselektor und die Übertragungssteuerung dient.

8. Kommunikationsgerät nach einem der Ansprüche 1 bis 7, bei dem die Identifikationsdaten eine Telefonnummer sind, die der externen Vorrichtung zugeordnet ist.

9. Kommunikationsgerät nach einem der Ansprüche 1 bis 8, wenn von Anspruch 1 abhängig, bei dem der Verbindungsselektor bestimmt, dass das erste Netzwerk auszuwählen ist, wenn die Identifikationsdaten anzeigen, dass die externe Vorrichtung in einem Ausland angeordnet ist.

10. Kommunikationsgerät nach einem der Ansprüche 1 bis 9, bei dem das Kommunikationsgerät ein Faxgerät ist.

11. Kommunikationsgerät nach einem der Ansprüche 2 und 3 bis 10, wenn von Anspruch 2 abhängig, bei dem, wenn der Verbindungsselektor (1a) das zweite Netzwerk (C1) auswählt, die Übertragungssteuerung (1b) nur die Identifikationsdaten aussendet, die in dem Identifikationsdatenspeicher (6b) gespeichert sind.

12. Kommunikationsgerät nach einem der Ansprüche 2 und 3 bis 11, wenn von Anspruch 2 abhängig, bei dem, wenn der Verbindungsselektor ein Netzwerk unter Ausschluss des Internets auswählt, die Übertragungssteuerung nur die Identifikationsdaten aussendet, die in dem Identifikationsdatenspeicher gespeichert sind.

13. Kommunikationsgerät nach einem der Ansprüche 1 bis 12, weiter mit einer Eingabevorrichtung (14) zum Eingeben der Identifikationsdaten der externen Vorrichtung.

14. Speichermedium (5) zum Speichern von Programmen zum Steuern eines Kommunikationsgerätes (A), das mit einer externen Vorrichtung (B1-B5) über mindestens ein erstes Netzwerk (IN) unter Benutzung des Internets und ein zweites Netzwerk unter Ausschluss des Internets kommuniziert, wobei das Kommunikationsgerät einen Zugriffsdatenspeicher (6a) zum Speichern von vorbestimmten Zugriffsdaten enthält, die zum Herstellen einer Verbindung zu dem ersten Netzwerk benötigt werden,
wobei das Speichermedium aufweist:
ein Verbindungsauswahlprogramm (5a) zum Bestimmen, ob das erste Netzwerk auszuwählen ist oder nicht; und
ein Übertragungssteuerprogramm (5b) zum Auslesen der Zugriffsdaten aus dem Zugriffsdatenspeicher und Senden der Zugriffsdaten, wenn das erste Netzwerk auszuwählen ist,
**dadurch gekennzeichnet,**
**dass** die Bestimmung, ob das erste Netzwerk auszuwählen ist oder nicht, ausgeführt wird durch Wahrnehmen des Ortes der externen Vorrichtung auf der Grundlage von Identifikationsdaten, die zu der externen Vorrichtung gehören.

15. Speichermedium nach Anspruch 14, bei dem das Speichermedium einen Nurlesespeicher (5) aufweist.

## Revendications

1. Appareil de communication (A) pour communiquer avec un dispositif externe (B1-B5) via au moins un premier réseau (IN) utilisant Internet et un second réseau (C1) à l'exclusion d'Internet, l'appareil de communication étant **caractérisé en ce qu'**il comprend :
un stockage de données d'accès (6a) pour stocker des données d'accès nécessaires pour établir une connexion au premier réseau (IN) ;
un sélecteur de connexion (1a) pour déterminer si le premier réseau doit être sélectionné ou non ; et
un contrôleur de transmission (1b) pour extraire les données d'accès du stockage de données d'accès et pour envoyer les données d'accès lorsque le sélecteur de connexion sélectionne le premier réseau ;
**caractérisé en ce que**
la détermination de si le premier réseau doit être sélectionné ou non est effectuée en discernant la localisation du dispositif externe sur la base de données d'identification appartenant au dispositif externe.

2. Appareil de communication selon la revendication 1, comprenant en outre un stockage de données d'identification (6b) pour stocker les données d'identification du dispositif externe.

3. Appareil de communication selon la revendication 2, comprenant en outre une mémoire morte programmable effaçable électriquement (6) servant de stockage de données d'accès et de stockage de données d'identification.

4. Appareil de communication selon la revendication 2 ou 3, dans lequel le contrôleur de transmission est agencé pour extraire les données d'identification enregistrées dans le stockage de données d'identification (6b) quand une requête pour sélectionner les données d'identification est émise.

5. Appareil de communication selon l'une quelconque des revendications 1 à 4, dans lequel les données d'accès comprennent un numéro d'identification d'utilisateur et un mot de passe.

6. Appareil de communication selon l'une quelconque des revendications 1 à 5, comprenant en outre une mémoire morte programmable effaçable électriquement (6) servant de stockage de données d'accès.

7. Appareil de communication selon l'une quelconque des revendications 1 à 6, comprenant en outre une unité centrale de traitement (1) servant de sélecteur de connexion et de contrôleur de transmission.

8. Appareil de communication selon l'une quelconque des revendications 1 à 7, dans lequel les données d'identification sont un numéro de téléphone attribué au dispositif externe.

9. Appareil de communication selon l'une quelconque des revendications 1 à 8 lorsqu'annexées à la revendication 1, dans lequel le sélecteur de connexion détermine que le premier réseau doit être sélectionné lorsque les données d'identification indiquent que le dispositif externe est localisé dans un pays étranger.

10. Appareil de communication selon l'une quelconque des revendications 1 à 9, dans lequel l'appareil de communication est un télécopieur.

11. Appareil de communication selon l'une quelconque des revendications 2 et 3 à 10 lorsqu'annexées à la revendication 2, dans lequel lorsque le sélecteur de connexion (1a) sélectionne le second réseau (C1), le contrôleur de transmission (1b) envoie seulement les données d'identification stockées dans le stockage de données d'identification (6b).

12. Appareil de communication selon l'une quelconque des revendications 2 et 3 à 11 lorsqu'annexées à la revendication 2, dans lequel lorsque le sélecteur de connexion sélectionne un réseau à l'exclusion d'Internet, le contrôleur de transmission envoie seulement les données d'identification stockées dans le stockage de données d'identification.

13. Appareil de communication selon l'une quelconque des revendications 1 à 12, comprenant en outre un dispositif d'entrée (14) pour entrer les données d'identification du dispositif externe.

14. Support de stockage (5) pour stocker des programmes pour contrôler un appareil de communication (A) communiquant avec un dispositif externe (B1-B5) via au moins un premier réseau (IN) utilisant Internet et un second réseau (C1) à l'exclusion d'Internet, l'appareil de communication incluant un stockage de données d'accès (6a) pour stocker des données d'accès prédéterminées nécessaires pour accéder au premier réseau, le support de stockage comprenant :
un programme de sélection de connexion (5a) pour déterminer si le premier réseau doit être sélectionné ou non ; et
un programme de contrôle de transmission (5b) pour extraire les données d'accès du stockage de données d'accès et envoyer les données d'accès lorsque le premier réseau doit être sélectionné, **caractérisé en ce que**
la détermination de si le premier réseau doit être sélectionné ou non est effectuée en discernant la localisation du dispositif externe sur la base de données d'identification appartenant au dispositif externe.

15. Support de stockage selon la revendication 14, dans lequel le support de stockage comprend une mémoire morte (5).
